# EUROPÄISCHE PATENTSCHRIFT

(11) **EP 3 335 933 B1**
(45) Veröffentlichungstag und Bekanntmachung des Hinweises auf die Patenterteilung: **29.01.2020**
(21) Anmeldenummer: 17173670.5
(22) Anmeldetag: 31.05.2017
(51) Int. Cl.: B60P 1/44

(54) **BELADEHILFE**
LOADING AID
AIDE AU CHARGEMENT

(30) Priorität: 19.12.2016 EP 16204956
(43) Veröffentlichungstag der Anmeldung: 20.06.2018
(73) Patentinhaber: MAGNA STEYR Fahrzeugtechnik AG & Co KG, 8041 Graz (AT)
(72) Erfinder: KRAMER, Ludwig, 86669 Königsmoos (DE)
(74) Vertreter: Zangger, Bernd

(56) Entgegenhaltungen:
- DE-A1- 3 123 546
- DE-A1- 10 053 759
- FR-A2- 2 537 515
- US-A- 4 778 328
- US-A1- 2005 118 006

## Beschreibung

### Gebiet der Erfindung

Die vorliegende Erfindung betrifft eine Beladehilfe für ein Personenkraftfahrzeug. Eine gattungsgemäße Beladehilfe wird in FR 2 537 515 A2 offenbart.

### Stand der Technik

Wie allgemein bekant weisen Personenkraftfahrzeuge üblicherweise im in Fahrtrichtung des Personenkraftfahrzeuges hinteren Bereich, also im Heck des Fahrzeuges, einen Kofferraum auf, der meistens durch Öffnen eines nach oben schwenkenden Kofferraumdeckels zugänglich ist. Zur leichteren Beladung und Entladung eines solchen Kofferraumes durch einen Nutzer des Personenkraftfahrzeuges wurden bereits verschiedene Beladehilfen vorgeschlagen.

So offenbart beispielsweise die DE 10 2014 215 813 A1 einen Ladeboden der mittels einer Verstelleinrichtung von einer Normallage, in der er im Wesentlichen horizontal ausgerichtete ist, in mindestens eine andere Lage, nämlich entweder in eine unterhalb oder oberhalb der Normallage befindliche Lage, ganz oder teilweise verstellbar ist.

Aus der DE 10 203 538 A1 ist ein Kraftfahrzeug, insbesondere Personenkombikraftwagen, bekannt, mit einem im Fahrzeugheck angeordneten Laderaum, einem heckseitig ausfahrbaren Ladeboden und einer Laderaumtür für die heckseitige Laderaumöffnung, die an dem Ladeboden schwenkbar gelagert ist.

### Zusammenfassung der Erfindung

Es ist eine Aufgabe der Erfindung, eine Beladehilfe für ein Personenkraftfahrzeug anzugeben, die dem Benutzer ein Beladen und/oder Entladen des Kofferraumes des Personenkraftfahrzeugs erheblich erleichtert, insbesondere auch dann, wenn die Last aus einer niedrigen Höhe in das Personenkraftfahrzeug aufgenommen werden soll.

Die Lösung der Aufgabe erfolgt durch eine Beladehilfe nach Anspruch 1.

Erfindungsgemäß ist ein Ladeboden in einem Personenkraftfahrzeug in einer Einfahrstellung, die üblicherweise zumindest bei geschlossenem Kofferraumdeckel vorliegt, horizontal im Kofferraum aufgenommen, bevorzugt auf Höhe eines Kofferraumbodens, so dass der Ladeboden in diesem Zustand einen Kofferraumboden bilden kann, der mit Lasten beladen werden kann.

Zum einfacheren Beladen kann der Ladeboden bei geöffnetem Kofferraumdeckel bzw. bei geöffneter Kofferraumtür oder Kofferraumtüren in eine Ausfahrstellung verfahren werden, also aus der Einfahrstellung horizontal nach hinten, in Heckrichtung des Fahrzeuges ausgefahren werden. Diese Bewegung erfolgt linear, im Wesentlichen horizontal, so dass der Ladeboden in der Ausfahrstellung etwa in gleicher Höhe wie zuvor, als Kofferraumboden, liegt. Diese Stellung des Ladebodens kann sich zum Beispiel gut eignen zum Beladen des Kofferraums aus einem üblichen Einkaufswagen eines Supermarktes.

Besonders bevorzugt ist der Ladeboden aber von der Absenkstellung linear in zumindest eine weitere Absenkstellung, insbesondere auch in mehrere verschiedene weitere Absenkstellungen, verfahrbar, in der der Ladeboden horizontal und noch niedriger als in der Absenkstellung angeordnet ist. In dieser weiteren Absenkstellung kann der Ladeboden horizontal weiter vom Kofferraum beabstandet sein als in der Absenkstellung, also weiter schräg nach hinten unten verfahren worden sein, gegenüber der Absenkstellung. Der Ladeboden kann auch in dieser weiteren Absenkstellung, bzw. in der letzten weiteren Absenkstellung, auf Bodenhöhe liegen.

Die Teleskopschienen können insbesondere mittels eines Spindelantriebs aus- und einfahrbar sein, um den Ladeboden weiter auszufahren oder einzufahren, also auch zu senken und zu heben. Die bevorzugt massiven Teleskopschienen können aus- und wieder einfahren und dienen dabei der Drehmomentaufnahme der Last bzw. entlasten die Spindelantriebe bei der Aufwärts- und Abwärtsbewegung.

Die Spindeltriebe werden bevorzugt mit der Teleskopschiene kompakt verbunden, so dass sie eine massive Einheit bilden.

Die Teleskopschiene kann in der Einfahrstellung im Wesentlichen senkrecht angeordnet sein, insbesondere in Fahrtrichtung hinter einer Rückenlehne eines Fahrzeugsitzes oder einer Fahrzeugbank.

Der Ladeboden, kann, insbesondere zusammen mit dem unteren Ende der Teleskopschiene, über einen Zahnriemen-Linearantrieb von der Einfahrstellung in die Ausfahrstellung verfahrbar sein. Der Zahnriemen-Linearantrieb ist bevorzugt wieder seitlich links und rechts des Ladebodens ausgeführt. Ein Antriebsmotor für den Zahnriemen-Linearantrieb kann beispielsweise mittig, insbesondere unterhalb eines Kofferraumbodens angeordnet sein. Der Ladeboden kann bei dieser im Wesentlichen horizontalen Bewegung unten auf Rollen, insbesondere auf Edelstahl Rollenleisten, geführt sein.

Bevorzugt ist die Teleskopschiene über einen Scherenantrieb, der insbesondere im oberen Bereich der Teleskopschiene an diese gekoppelt ist, von der Einfahrstellung in die Ausfahrstellung verfahrbar. Der Scherenantrieb kann insbesondere wieder symmetrisch links und rechts jeweils eine Schere umfassen, wobei die Schere auch an jeder Seite nur ein Glied umfassen kann, das an die jeweilige Teleskopschiene als zweites Scherenglied schwenkbar gekoppelt ist. Zwischen dem Scherenglied des Scherenantriebs und der Teleskopschiene kann in der Ausfahrstellung bevorzugt ein Winkel zwischen 50 Grad und 90 Grad liegen, besonders bevorzugt von ca. 60 Grad. Die Teleskopschiene kann in der Ausfahrstellung einen Winkel von ca. 10 bis 40 Grad zu einer Senkrechten einschließen, insbesondere von ca. 30 Grad.

Die bevorzugt zwei Gasdruckdämpfer (rechts und links am Ladeboden) halten den Ladeboden in der Ausfahrstellung und der Absenkstellung horizontal und verhindern so das Abkippen des Ladebodens unter Last. Bereits wenn der Ladeboden von der Einfahrstellung in die Ausfahrstellung bewegt wurde, also der Ladeboden ausgefahren ist aber noch ganz oben, ist der Gasdruckdämpfer bevorzugt auf Anschlag komplett ausgefahren. Erst dann kann der Ladeboden mittels Spindeltrieb und Teleskopschiene in die Absenkstellung nach unten verfahren werden. Während der Auf- und Abwärtsbewegung des Ladebodens bleiben die Gasdruckdämpfer also vorzugsweise komplett ausgefahren.

Bevorzugt umfasst die Beladehilfe ein Mittel, durch das beim Öffnen einer Heckklappe des Personenkraftfahrzeugs der Ladeboden automatisch aus der Einfahrstellung in die Ausfahrstellung und/oder in die Absenkstellung und/oder gegebenenfalls in eine weitere Absenkstellung verfahren wird. Dieses Mittel kann insbesondere einen oder mehrere Sensoren zum Erkennen des Öffnens der Heckklappe umfassen. Das Verfahren des Ladebodens kann auch durch einen oder mehrere Schalter, die vorzugsweise im Heck des Fahrzeuges angeordnet sind, erfolgen.

Das Personenkraftfahrzeug kann insbesondere eine Limousine, ein Kombi oder ein Coupé sein. Bevorzugt kann das Personenkraftfahrzeug ein Elektro- oder Hybridfahrzeug sein.

### Kurzbeschreibung der Zeichnungen

Die Erfindung wird im Folgenden beispielhaft unter Bezugnahme auf die Zeichnungen beschrieben.
- Fig. 1: ist eine schematische seitliche Ansicht einer erfindungsgemäßen Beladehilfe in einem Personenkraftfahrzeug.
- Fig. 2: ist eine schematische Ansicht einer erfindungsgemäßen Beladehilfe in einem Personenkraftfahrzeug gemäß Fig. 1 von oben.

### Detaillierte Beschreibung der Erfindung

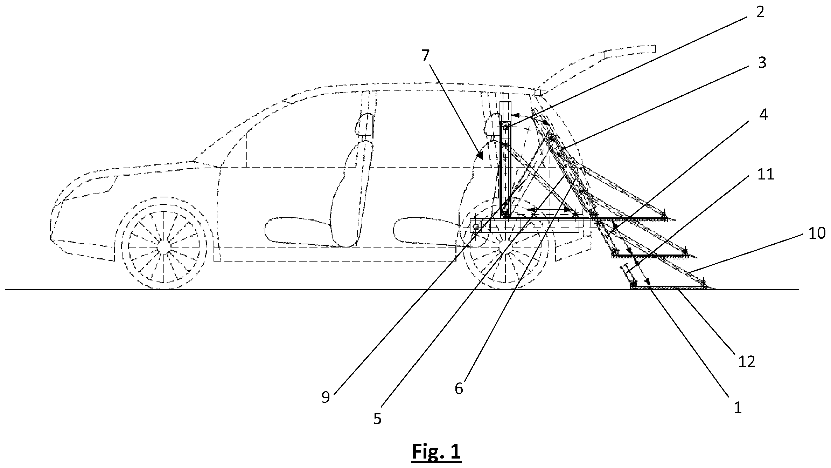

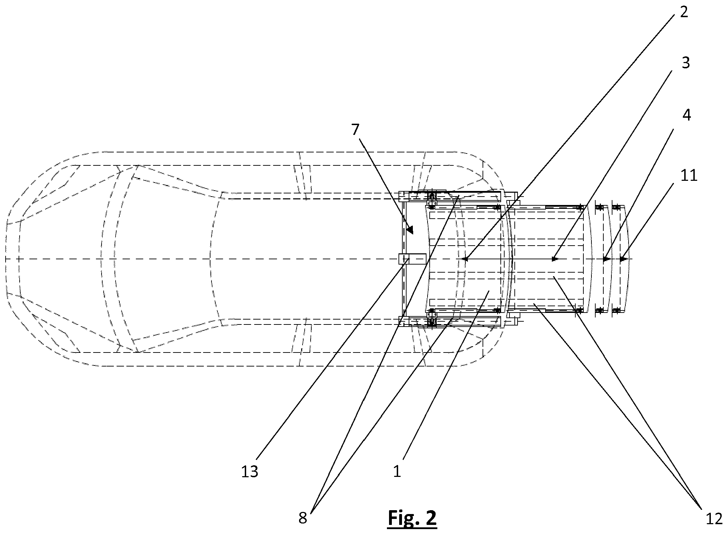

In den Fig. 1-2 ist eine erfindungsgemäße Beladehilfe in einem Personenkraftfahrzeug in verschiedenen Stellungen eines Ladebodens 1 dargestellt. Die Beladehilfe umfasst den Ladeboden 1, der in einer Einfahrstellung 2 horizontal im Kofferraum des Personenkraftfahrzeugs angeordnet ist. Dies wäre die übliche Stellung des Ladebodens 1 bei geschlossenem Kofferraum. Der Ladeboden 1 liegt dabei etwa in Höhe eines Kofferraumbodens, entweder auf einem Kofferraumboden auf oder ersetzt einen sonstigen Kofferraumboden.

Der Ladeboden 1 kann von der Einfahrstellung 2 linear in eine Ausfahrstellung 3 verfahren werden, in der der Ladeboden 1 horizontal, außerhalb des Kofferraums, auf im Wesentlichen gleicher Höhe wie in der Einfahrstellung 2 angeordnet ist.

Dazu ist der Ladeboden 1 über einen Zahnriemen-Linearantrieb 8 von der Einfahrstellung 2 in die Ausfahrstellung 3 ausfahrbar. Ein Antriebsmotor 13 für den Zahnriemen-Linearantrieb 8 ist mittig im Fahrzeug, insbesondere unterhalb eines Kofferraumbodens, angeordnet. Der Ladeboden 1 läuft dabei auf unter dem Ladeboden 1 angeordneten Edelstahl-Rollenleisten 12, die sich entlang der Ausfahrbewegung in mehreren geraden Linien erstrecken.

An beiden Seiten, also links und rechts der Fahrzeugmitte, sind am in Fahrtrichtung vorderen Ende des Ladebodens 1, die unteren Enden von Teleskopschienen 5 schwenkbar verbunden.

Die Teleskopschienen 5 sind in der Einfahrstellung 2 im Wesentlichen senkrecht, hinter Rückenlehnen 7, angeordnet.

Beim Ausfahren des Ladebodens 1 von der Einfahrstellung 2 in die Ausfahrstellung 3 wird, zusätzlich zur Führung des unteren Endes der Teleskopschienen 5 mit dem Ladeboden über den Zahnriemen-Linearantrieb 8, die Teleskopschiene 5 auch über einen Scherenantrieb 9, der insbesondere im oberen Bereich der Teleskopschiene 5 an diese gekoppelt ist, von der Einfahrstellung 2 in Fahrtrichtung nach hinten, in die Ausfahrstellung 3 bewegt. Das obere Ende der Teleskopschiene 5 wird dabei weniger weit nach hinten bewegt, als das untere Ende der Teleskopschiene 5, so dass diese in der Ausfahrstellung 3 in einer seitlichen Ansicht schräg von oben vorne nach unten hinten verläuft.

Mittels dieser zwei seitlichen Teleskopschienen 5 ist der Ladeboden 1 von der Ausfahrstellung 3 schräg nach hinten unten in die Absenkstellung 4 verfahrbar. In den Teleskopschienen 5 sind dazu Spindelantriebe 6 angeordnet, mit welchen der Ladeboden 1 aus- und einfahrbar ist, um den Ladeboden 1 zu senken und zu heben.

An den in Fahrtrichtung hinteren Enden des Ladebodens 1 sind wieder symmetrisch zur Fahrzeugmitte zwei Gasdruckdämpfer 10 angeordnet, die zusammen mit den beiden Teleskopschienen 5 das Gewicht des Ladebodens 1 und der darauf befindlichen Lasten tragen.

Der Ladeboden 1 kann somit insgesamt von einer Einfahrstellung 2, im Kofferraum, in Höhe eines Kofferraumbodens, horizontal nach hinten in eine Ausfahrstellung 3 ausgefahren werden und von dieser linear, schräg nach unten, in eine Absenkstellung 4, außerhalb des Kofferraums, abgesenkt werden.

Von der Absenkstellung 4 kann der Ladeboden 1 wieder linear, schräg nach hinten unten, in zumindest eine weitere Absenkstellung 11 abgesenkt werden. Insbesondere kann der Ladeboden 1 in der weiteren Absenkstellung 11 auf Bodenhöhe des Fahrzeuges aufliegen.

Die Aktuatoren der Beladehilfe sind bevorzugt elektrisch angetrieben, jedoch sind auch pneumatische oder hydraulische Antriebskomponenten erfindungsgemäß möglich.

### Bezugszeichenliste

- 1: Ladeboden
- 2: Einfahrstellung
- 3: Ausfahrstellung
- 4: Absenkstellung
- 5: Teleskopschiene
- 6: Spindelantrieb
- 7: Rückenlehne
- 8: Zahnriemen-Linearantrieb
- 9: Scherenantrieb
- 10: Gasdruckdämpfer
- 11: weitere Absenkstellung
- 12: Rollenleiste
- 13: Antriebsmotor für den Zahnriemen-Linearantrieb

## Patentansprüche

1. Beladehilfe für ein Personenkraftfahrzeug, umfassend einen Ladeboden (1), der in einer Einfahrstellung (2) horizontal im Kofferraum des Personenkraftfahrzeugs angeordnet ist, wobei der Ladeboden (1) von der Einfahrstellung (2) linear in eine Ausfahrstellung (3) verfahrbar ist, in der der Ladeboden (1) horizontal, außerhalb des Kofferraums, auf im Wesentlichen gleicher Höhe wie in der Einfahrstellung (2) angeordnet ist, wobei der Ladeboden (1) von der Ausfahrstellung (3) linear in eine Absenkstellung (4) verfahrbar ist, in der der Ladeboden (1) horizontal, außerhalb des Kofferraums, niedriger als in der Ausfahrstellung (3) angeordnet ist, **dadurch gekennzeichnet, dass** das Verfahren des Ladebodens (1) von der Ausfahrstellung (3) in die Absenkstellung (4) schräg, in Fahrtrichtung des Personenkraftfahrzeuges nach hinten unten verläuft, wobei der Ladeboden (1) mittels zwei seitlichen Teleskopschienen (5) von der Ausfahrstellung (3) in die Absenkstellung (4) verfahrbar ist, wobei das untere Ende der Teleskopschiene (5) am in Fahrtrichtung des Personenkraftfahrzeuges vorderen Ende des Ladebodens (1) befestigt ist, wobei zwischen der Teleskopschiene (5) und dem in Fahrtrichtung hinteren Ende des Ladebodens (1) ein Gasdruckdämpfer (10) angeordnet ist, wobei das an der Teleskopschiene (5) festgelegte Ende des Gasdruckdämpfers (10) an oder mit diesem verfahrbar ist, so dass der Gasdruckdämpfer (10) in der Absenkstellung (4) parallel zur Lage des Gasdruckdämpfers (10) in der Ausfahrstellung (3) angeordnet ist.

2. Beladehilfe nach Anspruch 1,
**dadurch gekennzeichnet, dass** die die Teleskopschienen (5) mittels eines Spindelantriebs (6) aus- und einfahrbar sind, um den Ladeboden (1) zu senken und zu heben.

3. Beladehilfe nach zumindest einem der Ansprüche 1 bis 2,
**dadurch gekennzeichnet, dass** die Teleskopschiene (5) in der Einfahrstellung im Wesentlichen senkrecht angeordnet ist, insbesondere in Fahrtrichtung hinter einer Rückenlehne (7).

4. Beladehilfe nach zumindest einem der Ansprüche 1 bis 3,
**dadurch gekennzeichnet, dass** der Ladeboden (1), insbesondere zusammen mit dem unteren Ende der Teleskopschiene (5), über einen Zahnriemen-Linearantrieb (8) von der Einfahrstellung (2) in die Ausfahrstellung (3) verfahrbar ist.

5. Beladehilfe nach zumindest einem der Ansprüche 1 bis 4,
**dadurch gekennzeichnet, dass** die Teleskopschiene (5) über einen Scherenantrieb (9), der insbesondere im oberen Bereich der Teleskopschiene (5) an diese gekoppelt ist, von der Einfahrstellung (2) in die Ausfahrstellung (3) verfahrbar ist.

6. Beladehilfe nach zumindest einem der vorhergehenden Ansprüche,
**dadurch gekennzeichnet, dass** der Ladeboden (1) von der Absenkstellung (4) linear in zumindest eine weitere Absenkstellung (11) verfahrbar ist, in der der Ladeboden (1) horizontal und noch niedriger als in der Absenkstellung (4) angeordnet ist, wobei der Ladeboden (1) in der weiteren Absenkstellung (11) bevorzugt horizontal weiter vom Kofferraum beabstandet ist als in der Absenkstellung (4).

7. Beladehilfe nach zumindest einem der vorhergehenden Ansprüche,
**dadurch gekennzeichnet, dass** die Beladehilfe ein Mittel umfasst, durch das beim Öffnen einer Heckklappe des Personenkraftfahrzeugs der Ladeboden (1) automatisch aus der Einfahrstellung (2) in die Ausfahrstellung (3) und/oder in die Absenkstellung (4) und/oder gegebenenfalls in eine weitere Absenkstellung (11) verfahren wird.

## Claims

1. Loading aid for a passenger car, comprising a loading platform (1) which, in a retracted position (2), is arranged horizontally in the boot of the passenger car, wherein the loading platform (1) is movable linearly from the retracted position (2) into an extended position (3) in which the loading platform (1) is arranged horizontally, outside the boot, at substantially the same height as in the retracted position (2), wherein the loading platform (1) is movable linearly from the extended position (3) into a lowered position (4) in which the loading platform (1) is arranged horizontally, outside the boot, at a lower point than in the extended position (3), **characterized in that** the movement of the loading platform (1) from the extended position (3) into the lowered position (4) runs obliquely rearwards and downwards in the direction of travel of the passenger car, wherein the loading platform (1) is movable from the extended position (3) into the lowered position (4) by means of two lateral telescopic rails (5), wherein the lower end of the telescopic rail (5) is fastened to the end of the loading platform (1) at the front in the direction of travel of the passenger car, wherein a gas pressure damper (10) is arranged between the telescopic rail (5) and the end of the loading platform (1) at the rear in the direction of travel, wherein the end of the gas pressure damper (10) that is fixed to the telescopic rail (5) is movable at or together with said rear end of the loading platform, and therefore the gas pressure damper (10) in the lowered position (4) is arranged parallel to the position of the gas pressure damper (10) in the extended position (3).

2. Loading aid according to Claim 1, **characterized in that** the telescopic rails (5) are extendable and retractable by means of a spindle drive (6) in order to lower and to raise the loading platform (1).

3. Loading aid according to at least one of Claims 1 to 2, **characterized in that** the telescopic rail (5) is arranged substantially perpendicularly in the retracted position, in particular behind a backrest (7) in the direction of travel.

4. Loading aid according to at least one of Claims 1 to 3, **characterized in that** the loading platform (1) is movable, in particular with the lower end of the telescopic rail (5), from the retracted position (2) into the extended position (3) via a toothed belt linear drive (8).

5. Loading aid according to at least one of Claims 1 to 4, **characterized in that** the telescopic rail (5) is movable from the retracted position (2) into the extended position (3) via a scissors drive (9) which is coupled to the telescopic rail (5) in particular in the upper region thereof.

6. Loading aid according to at least one of the preceding claims, **characterized in that** the loading platform (1) is movable linearly from the lowered position (4) into at least one further lowered position (11) in which the loading platform (1) is arranged horizontally and even lower than in the lowered position (4), wherein the loading platform (1) in the further lowered position (11) is preferably spaced apart horizontally further from the boot than in the lowered position (4).

7. Loading aid according to at least one of the preceding claims, **characterized in that** the loading aid comprises a means, by means of which, when a tailgate of the passenger car is opened, the loading platform (1) is automatically moved from the retracted position (2) into the extended position (3) and/or into the lowered position (4) and/or optionally into a further lowered position (11).

## Revendications

1. Aide au chargement destinée à un véhicule de tourisme, l'aide au chargement comprenant un plancher de chargement (1) qui est disposé dans la position rentrée (2) horizontalement dans le coffre du véhicule de tourisme, le plancher de chargement (1) étant déplaçable linéairement de la position rentrée (2) dans une position sortie (3) dans laquelle le plancher de chargement (1) est disposé horizontalement, à l'extérieur du coffre, sensiblement à la même hauteur que dans la position rentrée (2), le plancher de chargement (1) est déplaçable linéairement d'une position sortie (3) dans une position abaissée (4) dans laquelle le plancher de chargement (1) est disposé horizontalement, à l'extérieur du coffre, plus bas que dans la position sortie (3), **caractérisée en ce que** le déplacement du plancher de chargement (1) s'étend de la position sortie (3) dans la position abaissée (4) obliquement vers le bas en arrière par référence au sens de roulement de la voiture de tourisme, le plancher de chargement (1) est déplaçable à l'aide de deux rails télescopiques latéraux (5) de la position sortie (3) dans la position abaissée (4), l'extrémité inférieure du rail télescopique (5) étant fixée à l'extrémité avant du plancher de chargement (1) par référence au sens de roulement du véhicule de tourisme, un amortisseur à pression de gaz (10) étant disposé entre le rail télescopique (5) et l'extrémité arrière du plancher de chargement (1) par référence au sens de roulement, l'extrémité, fixée au rail télescopique (5), de l'amortisseur à pression de gaz (10) étant déplaçable sur celui-ci ou conjointement avec celui-ci de sorte que l'amortisseur à pression de gaz (10) soit disposé dans la position abaissée (4) parallèlement à la position de l'amortisseur à pression de gaz (10) dans la position sortie (3).

2. Aide au chargement selon la revendication 1, **caractérisée en ce que** les rails télescopiques (5) peuvent être rentrés et sortis à l'aide d'un entraînement à broche (6) pour soulever et abaisser le plancher de chargement (1).

3. Aide au chargement selon l'une au moins des revendications 1 à 2, **caractérisée en ce que** le rail télescopique (5) est disposé sensiblement verticalement dans la position rentrée, en particulier derrière un dossier (7) par référence au sens de roulement.

4. Aide au chargement selon l'une au moins des revendications 1 à 3, **caractérisée en ce que** le plancher de chargement (1) est déplaçable de la position rentrée (2) dans la position sortie (3), en particulier conjointement avec l'extrémité inférieure du rail télescopique (5), par le biais d'un entraînement linéaire à courroie crantée (8).

5. Aide au chargement selon l'une au moins des revendications 1 à 4, **caractérisée en ce que** le rail télescopique (5) est déplaçable de la position rentrée (2) dans la position sortie (3) par le biais d'un entraînement à ciseaux (9) qui est accouplé au rail télescopique (5) notamment dans la partie supérieure de celui-ci.

6. Aide au chargement selon l'une au moins des revendications précédentes, **caractérisée en ce que** le plancher de chargement (1) est déplaçable linéairement de la position abaissée (4) dans au moins une autre position abaissée (11) dans laquelle le plancher de chargement (1) est disposé horizontalement et encore plus bas que dans la position abaissée (4), le plancher de chargement (1) étant davantage espacé, de préférence horizontalement, du coffre dans l'autre position abaissée (11) que dans la position abaissée (4).

7. Aide au chargement selon l'une au moins des revendications précédentes, **caractérisée en ce que** l'aide au chargement comprend un moyen permettant, lors de l'ouverture du hayon de la voiture de tourisme (1), de déplacer le plancher de chargement automatiquement de la position rentrée (2) dans la position sortie (3) et/ou dans la position abaissée (4) et/ou éventuellement dans une autre position abaissée (11).
